# FASCICULE DE BREVET EUROPEEN

(11) **EP 1 571 082 B1**
(45) Date de publication et mention de la délivrance du brevet: **04.10.2006**
(21) Numéro de dépôt: 05101609.5
(22) Date de dépôt: 02.03.2005
(51) Int. Cl.: B64D 27/26

(54) **Système de montage interposé entre un moteur d'aéronef et une structure rigide d'un mât d'accrochage fixé sous une voilure de cet aéronef**
Aufhängevorrichtung eines Flugzeugtriebwerks an einem Flügelpylon
Aircraft engine attachment onto a wing pylon

(30) Priorité: 04.03.2004 FR 0450444
(43) Date de publication de la demande: 07.09.2005
(73) Titulaire: AIRBUS France, 31060 Toulouse (FR)
(72) Inventeur: Marche, Hervé, 31120, Roquettes (FR)
(74) Mandataire: Poulin, Gérard

(56) Documents cités:
- WO-A-96/18538
- US-A- 4 266 741
- US-A- 4 458 863
- US-A- 6 126 110

## Description

### DOMAINE TECHNIQUE

La présente invention se rapporte de façon générale à un système de montage interposé entre un moteur d'aéronef et une structure rigide d'un mât d'accrochage fixé sous une voilure de cet aéronef.

L'invention se rapporte également à un mât d'accrochage d'un moteur d'aéronef muni d'un tel système de montage, ce système de montage et le mât d'accrochage pouvant par ailleurs être utilisés sur tout type d'aéronef.

### ETAT DE LA TECHNIQUE ANTERIEURE

Un mât d'accrochage d'un aéronef est prévu pour constituer l'interface de liaison entre un moteur et une voilure de l'aéronef. Il permet de transmettre à la structure de cet aéronef les efforts générés par son moteur associé, et autorise également le cheminement du carburant, de l'électricité, de l'hydraulique et de l'air entre le moteur et l'aéronef.

Afin d'assurer la transmission des efforts, le mât comporte une structure rigide, par exemple du type « caisson », c'est-à-dire formée par l'assemblage de longerons supérieurs et inférieurs raccordés entre-eux par l'intermédiaire de nervures transversales.

D'autre part, le mât est muni d'un système de montage interposé entre le moteur et la structure rigide du mât, ce système comportant globalement au moins deux attaches, généralement une attache avant et une attache arrière.

De plus, le système de montage comprend un dispositif de reprise des efforts de poussée générés par le moteur. Dans l'art antérieur, ce dispositif prend typiquement la forme de deux bielles latérales raccordées d'une part à une partie avant du carter central du moteur, et d'autre part à l'attache arrière.

De la même façon, le mât d'accrochage comporte également un second système de montage interposé entre le mât et la voilure de l'aéronef, ce second système étant habituellement composé de deux ou trois attaches.

Enfin, le mât est pourvu d'une structure secondaire assurant la ségrégation et le maintien des systèmes tout en supportant des carénages aérodynamiques.

De façon connue de l'homme du métier, les efforts de poussée générés par le moteur provoquent habituellement une flexion longitudinale plus ou moins importante de ce dernier, à savoir une flexion résultant d'un couple émanant des efforts de poussée, et exercé selon un axe transversal de l'aéronef. A ce titre, il est également noté que durant les phases de croisière de l'aéronef, les efforts de poussée constituent l'unique cause de flexion longitudinale du moteur.

Lorsqu'une telle flexion longitudinale survient, notamment durant les phases de croisière de l'aéronef, deux cas peuvent se présenter. Dans un premier cas où aucune précaution particulière n'a été prise en ce qui concerne la flexion observée, on rencontre alors inévitablement des frottements élevés d'une part entre les pales tournantes de la soufflante et le carter de soufflante, et d'autre part entre les pales tournantes de compresseur et de turbine et le carter central du moteur. La conséquence principale de ces frottements réside alors dans une usure prématurée du moteur, qui est naturellement néfaste à la durée de vie de celui-ci, ainsi qu'à ses performances. Dans un second cas où l'on a prévu des jeux de fonctionnement adaptés de manière à ce qu'il n'y ait quasiment jamais de contact causé par la flexion longitudinale, le rendement du moteur est alors fortement diminué.

Au vu de ce qui précède, il paraît évident qu'il est nécessaire de prévoir un dispositif de reprise des efforts de poussée qui limite au mieux la flexion longitudinale du moteur due à ces mêmes efforts de poussée, de manière à minimiser autant que possible les frottements contraignants, sans avoir à surdimensionner les jeux de fonctionnement mentionnés ci-dessus.

Or il a été remarqué qu'aucun des dispositifs de reprise des efforts de poussée de l'art antérieur, tels que divulgués dans les documents US-A-6 126 110 et US-A-4 458 863, ne permettait de limiter de façon totalement satisfaisante la flexion longitudinale du moteur résultant du couple d'axe transversal lié aux efforts de poussée, notamment durant les phases de croisière de l'aéronef.

### EXPOSÉ DE L'INVENTION

L'invention a donc pour but de proposer un ensemble moteur pour aéronef remédiant au moins partiellement aux inconvénients mentionnés ci-dessus relatifs aux réalisations de l'art antérieur.

En outre, le but de la présente invention est de présenter un mât d'accrochage d'un moteur d'aéronef, muni d'un tel système de montage.

Pour ce faire, l'invention a pour objet un ensemble moteur pour aéronef tel que défini dans la revendication 1.

Avantageusement, le système de montage selon l'invention présente un dispositif de reprise des efforts de poussée qui améliore considérablement la reprise de ces efforts par rapport à celle observée dans l'art antérieur avec la solution classique de bielles latérales, puisque ce dispositif permet d'annuler entièrement le couple d'axe transversal appliqué au moteur et lié à ces mêmes efforts de poussée.

Par conséquent, durant les phases de croisière de l'aéronef, la présence d'un tel dispositif de reprise implique que le moteur ne subit aucune flexion longitudinale. De cette façon, aucune usure prématurée n'est rencontrée au niveau des éléments constitutifs du moteur, et la durée de vie ainsi que les performances de ce dernier ne sont donc plus affaiblies.

La suppression de la flexion longitudinale du moteur due aux efforts de poussée est tout d'abord obtenue par le fait que la reprise de ces efforts s'effectue au niveau du plan horizontal passant par l'axe longitudinal du moteur, ceci étant effectivement très avantageux dans la mesure où les efforts de poussée sont créés sur l'axe longitudinal de ce moteur.

L'agencement proposé est en effet tel que les deux extrémités inférieures latérales du palonnier se situent au niveau de ce plan horizontal passant par l'axe longitudinal du moteur, afin de pouvoir être raccordées aux ferrures également placées au niveau de ce même plan horizontal, et raccordées à la partie avant du carter central du moteur.

De plus, les efforts de poussée repris initialement sur le plan horizontal passant par l'axe longitudinal du moteur, par l'intermédiaire des ferrures et des extrémités inférieures latérales du palonnier, sont ensuite transportés vers le haut tout le long de ce palonnier à trois bras travaillant en flexion. Les efforts de poussée transportés par le palonnier se répartissent alors en deux efforts axiaux de sens opposés et orientés selon la direction longitudinale de l'aéronef, l'un étant transmis à l'attache avant sur laquelle le palonnier est raccordé, et l'autre étant transmis à la structure rigide du mât sur laquelle est raccordée l'extrémité supérieure de ce même palonnier.

Enfin, il est indiqué que le système de montage est un système isostatique, ce qui facilite grandement sa conception.

Le palonnier est raccordé à l'attache avant par l'intermédiaire d'au moins un axe rotulé orienté selon une direction transversale de l'aéronef. C'est par conséquent sur cet axe que s'exerce l'un des deux efforts axiaux de sens opposés et orientés selon la direction longitudinale de l'aéronef, avant d'être transmis à l'attache avant.

Dans un tel cas, on peut alors prévoir que chaque axe traverse une extrémité à double tête d'un corps d'attache avant, ainsi qu'une extrémité inférieure du bras supérieur du palonnier.

Préférentiellement, l'extrémité supérieure du bras supérieur est raccordée à la structure rigide du mât d'accrochage à l'aide d'une bielle, cette bielle étant de préférence orientée sensiblement selon une direction longitudinale de l'aéronef, et une extrémité arrière de ladite bielle coopérant avec une partie avant d'un longeron supérieur de la structure rigide du mât d'accrochage.

De plus, l'extrémité supérieure du bras supérieur peut être raccordée à une extrémité avant de la bielle par l'intermédiaire d'au moins un axe rotulé orienté selon une direction transversale de l'aéronef. Ainsi, c'est donc sur cet axe que s'exerce l'autre des deux efforts axiaux de sens opposés et orientés selon la direction longitudinale de l'aéronef, avant d'être transmis à la structure rigide du mât.

Pour ce faire, on peut prévoir une ferrure solidaire de la partie avant du longeron supérieur de la structure rigide du mât d'accrochage, cette ferrure étant de préférence raccordée à l'extrémité arrière de la bielle, toujours par l'intermédiaire d'au moins un axe orienté selon cette même direction transversale de l'aéronef.

Naturellement, la bielle susmentionnée pourrait être remplacée par un longeron faisant partie intégrante de la structure rigide du mât, sans sortir du cadre de l'invention. Avec un tel agencement, l'extrémité supérieure du bras supérieur pourrait alors par exemple être reliée à une extrémité avant du longeron à l'aide d'une rotule intégrée à ce dernier.

Toujours de façon préférentielle, chacune des extrémités arrière des deux ferrures solidaires de la partie avant du carter central du moteur est raccordée à l'une des deux extrémités inférieures latérales du palonnier à l'aide d'une biellette.

D'autres avantages et caractéristiques de l'invention apparaîtront dans la description détaillée non limitative ci-dessous.

### BRÈVE DESCRIPTION DES DESSINS

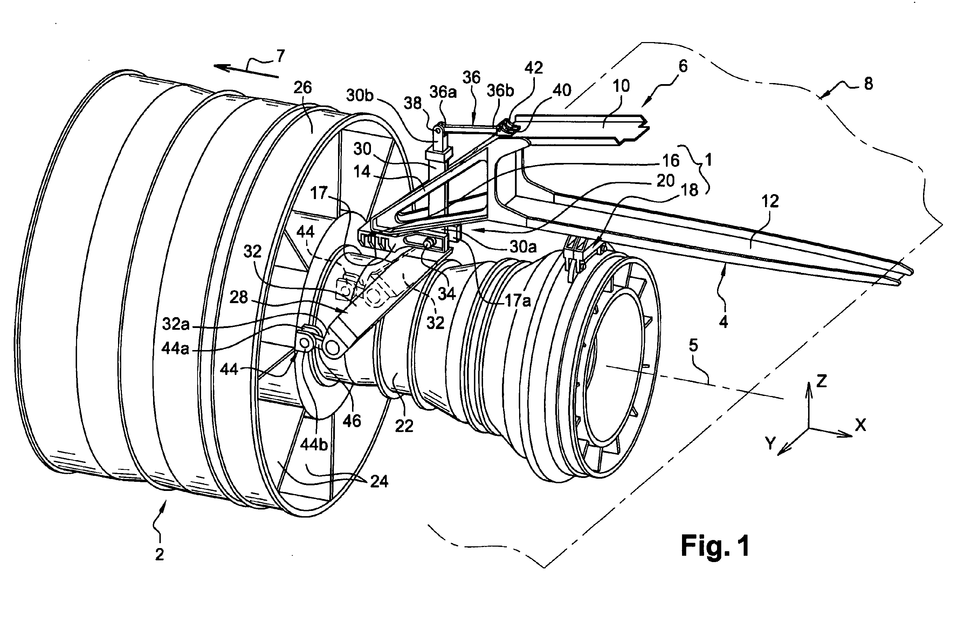

Cette description sera faite au regard de la figure unique, représentant une vue en perspective d'un système de montage interposé entre un moteur d'aéronef et une structure rigide d'un mât d'accrochage fixé sous une voilure de cet aéronef, selon un mode de réalisation préféré de la présente invention.

### EXPOSÉ DÉTAILLÉ DE MODES DE RÉALISATION PRÉFÉRÉS

En référence à la figure unique, on voit un système de montage 1 selon un mode de réalisation préféré de la présente invention, ce système de montage 1 étant interposé entre un moteur 2 d'aéronef et une structure rigide 4 d'un mât d'accrochage 6 fixé sous une aile d'aéronef représentée uniquement schématiquement pour des raisons évidentes de clarté, et désignée de façon générale par la référence numérique 8. Il est noté que le système de montage 1 représenté sur cette figure unique est adapté pour coopérer avec un turboréacteur 2, mais il pourrait bien entendu s'agir d'un système conçu pour suspendre tout autre type de moteur, tel qu'un turbopropulseur, sans sortir du cadre de l'invention.

Dans toute la description qui va suivre, par convention, on appelle X la direction parallèle à un axe longitudinal 5 du moteur 2, Y la direction orientée transversalement par rapport à l'aéronef, et Z la direction verticale, ces trois directions étant orthogonales entre-elles.

D'autre part, les termes « avant » et « arrière » sont à considérer par rapport à une direction d'avancement de l'aéronef rencontrée suite à la poussée exercée par les moteurs 2, cette direction étant représentée schématiquement par la flèche 7.

Sur la figure unique, on peut voir que seule une portion de la structure rigide 4 du mât d'accrochage 6 a été représentée, accompagnée évidemment du système de montage 1 faisant partie intégrante de ce mât 6, ce dernier étant également objet de la présente invention.

Les autres éléments constitutifs non-représentés de ce mât 6, tels que les moyens d'accrochage de la structure rigide 4 sous la voilure 8 de l'aéronef, ou encore la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

De façon connue, il est indiqué que la structure rigide 4 est globalement réalisée par l'assemblage de longerons inférieurs 12 et supérieurs 10 raccordés entre-eux par une pluralité de nervures transversales (non représentées). De plus, une partie avant de cette structure rigide 4 est constituée par une pyramide 14, également connue de l'homme du métier et prenant donc la forme d'une structure partant d'une base et s'étendant vers un sommet en allant vers l'avant et en se rapprochant de l'axe longitudinal 5 du moteur 2.

Dans le mode de réalisation préféré de la présente invention représenté sur la figure unique, le système de montage 1 comporte tout d'abord une attache avant 16, une attache arrière 18, ainsi qu'un dispositif 20 de reprise des efforts de poussée générés par le moteur 2. A ce titre, il est précisé que les deux attaches 16 et 18 précitées sont du type classiques et connus de l'homme du métier. Par conséquent, ils seront uniquement décrits succinctement, à titre indicatif et non limitatif.

En ce qui concerne l'attache avant 16, celle-ci est d'une part solidaire d'une extrémité avant de la pyramide 14 de la structure rigide 4, c'est-à-dire son sommet, et d'autre part solidaire d'une partie avant d'un carter central 22 du moteur 2. Plus précisément, l'attache avant 16 pénètre dans une portion du carter central 22 qui porte des pales fixes 24 reliant un carter de soufflante 26 du moteur 2 à ce même carter central 22.

Cette attache avant 16 comprend généralement une rotule (non représentée), également appelée « monoball », qui pénètre à l'intérieur du carter central 22 de manière à pourvoir assurer la reprise des efforts selon la direction verticale Z ainsi que selon la direction transversale Y. Par ailleurs, l'attache avant 16 comporte un corps 17 dont une extrémité arrière 17a sera exposée de façon plus détaillée ci-dessous.

En outre, l'attache arrière 18 est d'une part solidaire d'une partie arrière du carter central 22, et d'autre part solidaire d'un longeron inférieur 12 de la structure rigide 4 du mât 6. L'attache arrière classique 18 représentée sur la figure unique est globalement constituée de manilles et de ferrures, et assure la reprise des efforts selon les directions Y et Z, ainsi que la reprise du moment s'exerçant selon la direction X.

La particularité de l'invention réside dans le fait que le système de montage 1 comporte un dispositif 20 de reprise des efforts de poussée conçu pour annuler totalement la flexion longitudinale du moteur 2 résultant d'un couple d'axe transversal lié à ces efforts de poussée. Ainsi, durant les phases de croisière de l'aéronef où la flexion longitudinale du moteur 2 est normalement exclusivement due aux efforts de poussée, aucune déformation longitudinale de ce moteur 2 n'est ainsi rencontrée.

Tout d'abord, il est précisé qu'un plan vertical XZ passant par l'axe longitudinal 5 du moteur 2 constitue un plan de symétrie pour le dispositif de reprise 20.

Comme on peut clairement l'apercevoir sur la figure unique, ce dispositif 20 comprend principalement un palonnier 28 prenant globalement la forme d'une fourche, et disposant donc de trois bras 30,32 solidaires les uns aux autres. Parmi ces trois bras, on compte tout d'abord un bras supérieur 30 orienté selon la direction verticale Z, perpendiculairement à l'axe longitudinal 5 du moteur 2. Par conséquent, ce bras supérieur 30 est droit et agencé dans le plan vertical XZ passant par l'axe longitudinal 5, au-dessus du carter central 22.

Par ailleurs, on compte également deux bras inférieurs latéraux 32, symétriques par rapport au plan vertical XZ passant par l'axe longitudinal 5 du moteur 2, et étant de forme courbe de manière à pouvoir être disposés correctement autour du carter central 22. De plus, ces bras inférieurs 32 s'écartent d'un plan horizontal XY passant par l'axe longitudinal 5 en allant vers l'arrière, comme cela est visible sur la figure unique. Ainsi, les deux bras inférieurs 32 s'étendent vers le bas au moins jusqu'au plan horizontal XY passant par l'axe longitudinal 5, et vers le haut jusqu'au plan vertical XZ passant par ce même axe. A cet égard, ils forment ensemble grossièrement un demi-anneau situé dans un plan incliné par rapport aux directions longitudinale X et verticale Z, et non-incliné par rapport à la direction transversale Y.

A titre d'exemple indicatif, le palonnier 28 peut être réalisé à l'aide de deux pièces rapportées l'une sur l'autre et symétriques par rapport au plan vertical XZ passant par l'axe 5.

Pour effectuer la jonction entre le palonnier 28 et l'attache avant 16, le corps d'attache avant 17 de cette dernière comporte une extrémité arrière 17a à double tête dont chacune des têtes (non référencées) s'étend selon la direction longitudinale X, et entre lesquelles est située une extrémité inférieure 30a du bras supérieur 30.

De cette façon, un axe rotulé 34 ou rotule, orienté selon la direction transversale Y, traverse les deux têtes de l'extrémité arrière 17a ainsi que l'extrémité inférieure 30a coopérant avec une rotule de l'axe 34, ces éléments 17a et 30a étant bien entendu pourvus d'orifices autorisant un tel montage.

D'autre part, le bras supérieur 30 comprend également une extrémité supérieure 30b en forme de double tête dont chacune des têtes (non référencées) s'étend selon la direction verticale Z, et entre lesquelles est située une extrémité avant 36a d'une bielle 36 établissant une jonction rotulée entre la structure rigide 4 et le palonnier 28. A titre indicatif, il est noté que cette extrémité 30b constitue également l'extrémité supérieure du palonnier 28.

De cette façon, un axe rotulé 38 ou rotule, orienté selon la direction transversale Y, traverse les deux têtes de l'extrémité supérieure 30b ainsi que l'extrémité avant 36a coopérant avec une rotule de l'axe 38, ces éléments 30b et 36a étant bien entendu ici aussi pourvus d'orifices autorisant un tel montage.

La bielle 36 s'étend sensiblement selon la direction longitudinale X jusqu'à une extrémité arrière 36b située entre les deux têtes (non référencées) d'une ferrure à double tête 40, solidaire de la partie avant du longeron supérieur 10 de la structure rigide 4. Ici encore, un axe rotulé 42 orienté selon la direction transversale Y traverse les deux têtes de la ferrure 40 s'étendant selon la direction longitudinale X, ainsi que l'extrémité arrière 36b de la bielle 36.

Naturellement, la bielle 36 peut s'étendre selon une autre direction que la direction X, et est de préférence agencée parallèlement au longeron supérieur 10.

Comme on peut l'apercevoir sur la figure unique, le bras supérieur 30 traverse la pyramide 14, ce qui contribue avantageusement à obtenir un système de montage 1 de faible encombrement.

A présent en ce qui concerne les bras inférieurs latéraux 32 ainsi que leurs éléments associés qui seront présentés ci-dessous, il est noté qu'un seul de ces deux bras 32 sera entièrement décrit, dans la mesure où ils sont identiques et symétriques par rapport au plan fictif vertical XZ passant par l'axe longitudinal 5.

Ainsi, chaque bras 32 comprend une extrémité inférieure 32a qui se situe au niveau du plan fictif horizontal XY passant par l'axe longitudinal 5, et qui en d'autres termes est traversée par ce même plan afin de pouvoir reprendre les efforts de poussée à l'endroit où ils sont créés. Toujours à titre indicatif, il est noté que cette extrémité 32a constitue également une extrémité inférieure latérale du palonnier 28.

Une ferrure 44, de préférence à double-tête, est associée au bras 32 et s'étend selon la direction longitudinale X. Cette ferrure 44 comporte une extrémité avant 44a traversée par le plan horizontal XY passant par l'axe 5, et étant solidarisée à la partie avant du carter central 22. En outre, elle comporte une extrémité arrière 44b raccordée à l'extrémité inférieure latérale 32a du bras 32, cette extrémité arrière 44b étant par conséquent également traversée par le plan horizontal XY passant par l'axe 5.

Dans le mode de réalisation préféré décrit, pour assurer la jonction entre l'extrémité arrière 44b de la ferrure à double-tête 44 et l'extrémité inférieure latérale 32a du bras 32, il est utilisé une biellette 46, s'étendant selon la direction X dans le plan horizontal XY passant par l'axe 5. Par conséquent, la biellette 46 est par exemple montée de façon articulée entre les deux têtes (non référencées) de l'extrémité arrière 44b de la ferrure 44, et également montée de façon articulée sur l'extrémité inférieure latérale 32a du bras 32.

Néanmoins, si la solution de biellette est préférée, il aurait également pu être utilisé des manilles ou toute autre solution analogue, sans sortir du cadre de l'invention.

Avec une telle configuration, lors des phases de croisière de l'aéronef et en raison des efforts de poussée générés par le moteur 2, les deux extrémités inférieures latérales 32a subissent respectivement deux efforts axiaux orientés vers l'avant selon la direction X. De plus, l'extrémité inférieure 30a du bras supérieur 30 est soumise à un effort axial orienté vers l'arrière selon la direction X, tandis que l'extrémité supérieure 30b de ce bras supérieur 30 subit un effort axial orienté vers l'avant selon cette même direction. Ainsi, ces efforts axiaux sont tels que le moment d'axe transversal lié aux efforts de poussée et appliqué au moteur 2 est nul, de sorte que ce dernier n'est alors soumis à aucune flexion longitudinale.

Bien entendu, diverses modifications peuvent être apportées par l'homme du métier aux système de montage 1 et au mât d'accrochage 6 qui viennent d'être décrits, uniquement à titre d'exemples non limitatifs.

## Revendications

1. Ensemble moteur pour aéronef comprenant un moteur (2), un mât d'accrochage (6) du moteur (2) fixé sous une voilure (8) de l'aéronef, ledit mât d'accrochage (6) comprenant un système de montage (1) interposé entre ledit moteur (2) et une structure rigide (4) de ce mât d'accrochage (6), le système comprenant une attache avant (16), une attache arrière (18), ainsi qu'un dispositif (20) de reprise des efforts de poussée générés par le moteur (2), **caractérisé en ce que** ledit dispositif (20) de reprise des efforts de poussée comprend un palonnier (28) disposant d'un bras supérieur (30) et de deux bras inférieurs latéraux (32), les bras supérieur et inférieurs latéraux (30,32) étant solidaires et pourvus respectivement d'une extrémité supérieure (30b) ainsi que de deux extrémités inférieures latérales (32a) du palonnier (28), les deux extrémités inférieures latérales (32a) étant placées de façon à être traversées par un plan horizontal passant par un axe longitudinal (5) du moteur (2), le dispositif (20) de reprise des efforts de poussée étant également muni de deux ferrures (44) situées de part et d'autre du moteur (2) et comprenant chacune une extrémité avant (44a) également traversée par le plan horizontal passant par l'axe longitudinal (5) du moteur (2) et solidarisée à une partie avant d'un carter central (22) du moteur, ainsi qu'une extrémité arrière (44b) raccordée à l'une des deux extrémités inférieures latérales (32a) du palonnier (28), et **en ce que** ledit palonnier (28) est également raccordé à l'attache avant (16) du système de montage par l'intermédiaire d'au moins un axe rotulé (34) orienté selon une direction transversale (Y) de l'aéronef, ainsi qu'à la structure rigide (4) du mât d'accrochage (6) par l'intermédiaire de son extrémité supérieure (30b).

2. Ensemble selon la revendication 1, **caractérisé en ce que** chaque axe rotulé (34) traverse une extrémité à double tête (17a) d'un corps d' attache avant (17), ainsi qu'une extrémité inférieure (30a) du bras supérieur (30) dudit palonnier (28).

3. Ensemble selon l'une quelconque des revendications précédentes, **caractérisé en ce que** l'extrémité supérieure (30b) du bras supérieur (30) est raccordée à la structure rigide (4) du mât d'accrochage (6) à l'aide d'une bielle (36).

4. Ensemble selon la revendication 3, **caractérisé en ce que** ladite bielle (36) est orientée sensiblement selon une direction longitudinale (X) de l'aéronef, et **en ce qu'**une extrémité arrière (36b) de ladite bielle (36) coopère avec une partie avant d'un longeron supérieur (10) de la structure rigide (4) du mât d'accrochage (6).

5. Ensemble selon la revendication 4, **caractérisé en ce que** l'extrémité supérieure (30b) du bras supérieur (30) est raccordée à une extrémité avant (36a) de ladite bielle (36) par l'intermédiaire d'au moins un axe rotulé (38) orienté selon la direction transversale (Y) de l'aéronef, et **en ce qu'**une ferrure (40) solidaire de la partie avant du longeron supérieur (10) de la structure rigide (4) du mât d'accrochage (6) est raccordée à l'extrémité arrière (36b) de ladite bielle (36) par l'intermédiaire d'au moins un axe rotulé (42) orienté selon cette même direction transversale (Y) de l'aéronef.

6. Ensemble selon la revendication 5, **caractérisé en ce que** l'extrémité supérieure (30b) du bras supérieur (30) et ladite ferrure (40) sont à double tête.

7. Ensemble selon l'une quelconque des revendications précédentes, **caractérisé en ce que** chacune des extrémités arrière (44b) des deux ferrures (44) solidaires de la partie avant du carter central (22) du moteur (2) est raccordée à l'une des deux extrémités inférieures latérales (32a) du palonnier (28) à l'aide d'une biellette (46).

8. Ensemble selon l'une quelconque des revendications précédentes, **caractérisé en ce que** le bras supérieur (30) du palonnier (28) est droit et orienté selon une direction verticale (Z) de l'aéronef, et **en ce que** les deux bras inférieurs latéraux (32) forment ensemble sensiblement un demi-anneau.

9. Ensemble selon l'une quelconque des revendications précédentes, **caractérisé en ce que** ledit système comporte une attache avant (16) solidaire de la partie avant du carter central (22) du moteur (2) et d'une extrémité avant d'une pyramide (14) constituant une partie avant de la structure rigide (4) du mât (6), et **en ce que** ledit système comporte également une attache arrière (18) solidaire d'une partie arrière du carter central (22) du moteur (2) et de la structure rigide (4) du mât (6).

10. Ensemble selon la revendication 9, **caractérisé en ce que** le bras supérieur (30) du palonnier (28) est agencé de façon à traverser ladite pyramide (14) de la structure rigide (4) du mât (6).

## Claims

1. Aircraft engine assembly incorporating an engine (2), an attachment strut (6) for engine (2) fixed beneath the aircraft wing (8), said attachment strut (6) incorporating a mounting system (1) inserted between an aircraft engine (2) and a rigid structure (4) of an attachment strut (6) fixed under a wing (8) of this aircraft, the system including a forward mount (16), an aft mount (18), and a device (20) for resisting thrusts generated by the engine (2), **characterized in that** the said thrust resistance device (20) comprises a spreader beam (28) provided with an upper arm (30) and two lateral lower arms (32), the upper and lateral lower arms (30, 32) being fixed and fitted with an upper end (30b) and two lateral lower ends (32a) of the spreader beam (28), the two lateral lower ends (32a) being placed such that a horizontal plane passes through them an through a longitudinal axis (5) of the engine (2), the thrust resistance device (20) also being fitted with two fittings (44) on each side of the engine (2) and each comprising a forward end (44a) through which the horizontal plane passing through the longitudinal axis (5) of the engine (2) also passes, and fixed to a forward part of a central casing (22) of the engine, and an aft end (44b) connected to one of the two lateral lower ends (32a) of the spreader beam (28), and **in that** the said spreader beam (28) is also connected to the forward mount (16) of the mounting system, and to the rigid structure (4) of the attachment strut (6) through its upper end (30b).

2. Assembly according to claim 1, **characterized in that** each swivel pin (34) passes through a double headed end (17a) of a forward mount body (17), and a lower end (30a) of the upper arm (30) of the said spreader beam (28).

3. Assembly according to any one of the above claims, **characterized in that** the upper end (30b) of the upper arm (30) is connected to the rigid structure (4) of the attachment strut (6) through a connecting rod.

4. Assembly according to claim 3, **characterized in that** the said connecting rod (36) is oriented approximately along a longitudinal direction (X) of the aircraft, and **in that** an aft end (36b) of the said connecting rod (36) cooperates with a forward part of an upper stringer (10) of the rigid structure (4) of the attachment strut (6).

5. Assembly according to claim 4, **characterized in that** the upper end (30b) of the upper arm (30) is connected to a forward end (36a) of the said connecting rod (36) through at least one swivel pin (38) oriented along a transverse direction (Y) of the aircraft, and **in that** a fitting (40) fixed to the forward part of the upper stringer (10) of the rigid structure (4) of the attachment strut (6) is connected to the aft end (36b) of the said connecting rod (36) through at least one swivel pin (42) oriented along this same transverse direction (Y) of the aircraft.

6. Assembly according to claim 1, **characterized in that** the upper end (30b) of the upper arm (30) and the said fitting (40) are double headed.

7. Assembly according to any one of the above claims, **characterized in that** each aft end (44b) of the two fittings (44) fixed to the forward part of the central casing (22) of the engine (2) is connected to one of the two lateral lower ends (32a) of the spreader beam (28) using a connecting rod (46).

8. Assembly according to any one of the above claims, **characterized in that** the upper arm (30) of the spreader beam (28) is straight and is oriented along a vertical direction (Z) of the aircraft, and **in that** the two lateral lower arms (32) combined form an approximate half-ring.

9. Assembly according to any ane of the above claims, **characterized in that** the said system comprises a forward mount (16) fixed to the forward part of the central casing (22) of the engine (2) and a forward end of a pyramid (14) forming a forward part of the rigid structure (4) of the strut (6), and **in that** the said system also comprises an aft mount (18) fixed to an aft part of the central casing (22) of the engine (2) and the rigid structure (4) of the strut (6).

10. Assembly according to claim 9, **characterized in that** the upper arm (30) of the spreader beam (28) is arranged so as to pass through the said pyramid (14) of the rigid structure (4) of the strut (6).

## Patentansprüche

1. Triebwerkeinheit für ein Luftfahrzeug, umfassend ein Triebwerk (2), einen Aufhängungsmast (6) des Triebwerks (2), der unter einem Tragwerk (8) des Luftfahrzeugs befestigt ist, wobei der Aufhängungsmast (6) ein zwischen das Triebwerk (2) und eine starre Struktur (4) dieses Aufhängungsmasts (6) eingefügtes Montagesystem (1) umfasst und das System eine vordere Befestigung (16), eine hintere Befestigung (18) sowie eine Vorrichtung (20) zur Aufnahme von durch das Triebwerk (2) erzeugten Schubkräften aufweist,
**dadurch gekennzeichnet, dass** die Vorrichtung (20) zur Aufnahme von Schubkräften ein Ausgleichsgestänge (28) umfasst, das über einen oberen Arm (30) und zwei untere laterale Arme (32) verfügt, wobei der obere Arm und die unteren Arme (30,32) einstückig bzw. fest miteinander verbunden sind und jeweils mit einem oberen Ende (30b) sowie mit zwei unteren lateralen Enden (32a) des Ausgleichsgestänges (28) versehen sind, wobei die beiden unteren lateralen Enden (32a) derart angeordnet sind, dass sie von einer durch eine Longitudinalachse (5) des Triebwerks (2) hindurchgehende Horizontalebene durchsetzt sind und die Vorrichtung (20) zur Aufnahme von Schubkräften auch mit zwei Beschlagteilen (44) ausgestattet ist, die sich auf beiden Seiten des Triebwerks (2) befinden und jeweils ein vorderes Ende (44a), das ebenfalls von der durch die Longitudinalachse (5) des Triebwerks (2) hindurchgehenden Horizontalebene durchsetzt ist und mit einem vorderen Abschnitt eines zentralen Gehäuses (22) des Triebwerks einstückig bzw. fest verbunden ist, sowie ein hinteres Ende (44b), das mit einem der beiden unteren lateralen Enden (32a) des Ausgleichsgestänges (28) verbunden ist, aufweisen, und dass das Ausgleichsgestänge (28) auch mit der vorderen Befestigung (16) des Montagesystems über mindestens eine Kugelgelenkachse (34), die in einer Transversalrichtung (Y) des Luftfahrzeugs ausgerichtet ist, sowie mit einer starren Struktur (4) des Aufhängungsmasts (6) über dessen oberes Ende (30b) verbunden ist.

2. Einheit nach Anspruch 1, **dadurch gekennzeichnet, dass** jede Kugelgelenkachse (34) ein Doppelkopfende (17a) eines vorderen Befestigungskörpers (17) sowie ein unteres Ende (30a) des oberen Arms (30) des Ausgleichsgestänges (28) durchsetzt.

3. Einheit nach einem der vorangehenden Ansprüche, **dadurch gekennzeichnet, dass** das obere Ende (30b) des oberen Arms (30) mit der starren Struktur (4) des Aufhängungsmasts (6) mittels einer Kurbelstange (36) verbunden ist.

4. Einheit nach Anspruch 3, **dadurch gekennzeichnet, dass** die Kurbelstange (36) im wesentlichen in einer Longitudinalrichtung (X) des Luftfahrzeugs ausgerichtet ist, und dass ein hinteres Ende (36b) der Kurbelstange (36) mit einem vorderen Abschnitt eines oberen Längsträgers (10) der starren Struktur (4) des Aufhängungsmasts (6) zusammenwirkt.

5. Einheit nach Anspruch 4, **dadurch gekennzeichnet, dass** das obere Ende (30b) des oberen Arms (30) mit einem vorderen Ende (36a) der Kurbelstange (36) über mindestens eine Kugelgelenkachse (38) verbunden ist, die in einer Transversalrichtung (Y) des Luftfahrzeugs ausgerichtet ist, und dass ein mit dem vorderen Abschnitt des oberen Längsträgers (10) der starren Struktur (4) des Aufhängungsmasts (6) einstückiges bzw. fest verbundenes Beschlagteil (40) mit dem hinteren Ende (36b) der Kurbelstange (36) über mindestens eine Kugelgelenkachse (42) verbunden ist, die ebenfalls in dieser Transversalrichtung (Y) des Luftfahrzeugs ausgerichtet ist.

6. Einheit nach Anspruch 5, **dadurch gekennzeichnet, dass** das obere Ende (30b) des oberen Arms (30) des Beschlagteils (40) doppelköpfig ist.

7. Einheit nach einem der vorangehenden Ansprüche, **dadurch gekennzeichnet, dass** jedes der hinteren Enden (44b) der beiden Beschlagteile (44), die mit dem vorderen Abschnitt des zentralen Gehäuses (22) des Triebwerks (2) einstückig bzw. fest verbunden sind, mit einem der unteren lateralen Enden (32a) des Ausgleichsgestänges (28) mittels eines Kurbelteils (46) verbunden sind.

8. Einheit nach einem der vorangehenden Ansprüche, **dadurch gekennzeichnet, dass** der obere Arm (30) des Ausgleichsgestänges (28) gerade ist und in einer Vertikalrichtung (Z) des Luftfahrzeugs ausgerichtet ist, und dass die beiden unteren lateralen Arme (32) gemeinsam im wesentlichen einen Halb-Ring bilden.

9. Einheit nach einem der vorangehenden Ansprüche, **dadurch gekennzeichnet, dass** das System eine vordere Befestigung (16) umfasst, die mit dem vorderen Abschnitt des zentralen Gehäuses (22) des Triebwerks (2) sowie mit einem vorderen Ende einer einen vorderen Abschnitt der starren Struktur (4) des Masts (6) bildenden Pyramide (14) einstückig bzw. fest verbunden ist, und dass das System auch eine hintere Befestigung (18) umfasst, die mit einem hinteren Abschnitt des zentralen Gehäuses (22) des Triebwerks (2) und der starren Struktur (4) des Masts (6) einstückig bzw. fest verbunden ist.

10. Einheit nach Anspruch 9, **dadurch gekennzeichnet, dass** der obere Arm (30) des Ausgleichsgestänges (28) derart angeordnet ist, dass er die Pyramide (14) der starren Struktur (4) des Masts (6) durchsetzt.
